(19) Europäisches Patentamt / European Patent Office / Office européen des brevets

(11) **EP 1 731 891 B1**

(12) **EUROPEAN PATENT SPECIFICATION**

(45) Date of publication and mention
of the grant of the patent:
**18.04.2012 Bulletin 2012/16**

(51) Int Cl.:
*G01M 1/30* (2006.01)          *G01M 1/22* (2006.01)
*G01M 17/02* (2006.01)

(21) Application number: **06121308.8**

(22) Date of filing: **30.01.1997**

(54) **Wheel balancer with servo motor**

Radauswuchtvorrichtung mit servomotor

Equilibreuse de roues à servomoteur

(84) Designated Contracting States:
**DE FR IT**

(30) Priority: **31.01.1996 US 594756**

(43) Date of publication of application:
**13.12.2006 Bulletin 2006/50**

(62) Document number(s) of the earlier application(s) in
accordance with Art. 76 EPC:
**97903882.5 / 0 877 920**

(73) Proprietor: **HUNTER ENGINEERING COMPANY**
**Bridgeton, MO 63044 (US)**

(72) Inventors:
• **Parker, Paul Daniel**
**Kirkwood, MO 63122 (US)**
• **Douglas, Michael W.**
**St. Charles, Missouri 63304 (US)**

(74) Representative: **Dorschner, David et al**
**Dennemeyer & Associates S.A.**
**55, rue des Bruyères**
**1274 Howald (LU)**

(56) References cited:
**WO-A-88/03866      US-A- 5 103 595**

## Description

### Technical Field

This invention relates to wheel balancers and in particular to improved1. drive systems and displays for wheel balancers.

The determination of unbalance in vehicle wheels is carried out by an analysis with reference to phase and amplitude of the mechanical vibrations caused by rotating unbalanced masses in the wheel. The mechanical vibrations are measured as motions, forces, or pressures by means of transducers, which convert the mechanical vibrations to electrical signals. Each signal is the combination of fundamental oscillations caused by imbalance and noise.

It is well known in the art that a variety of types of correction weights are available for placing on the wheel to correct the measured imbalance. For example, adhesive-backed weights, patch balance weights and hammer-on weights are available from a number of different manufacturers. Most balancers assume that the wheel/tire assembly will be rotated to a particular position (for example, disposing the desired weight correction position at the top or twelve o'clock rotational position) for weight placement. This is generally not a problem, unless it would be more convenient to apply the weight with the wheel/tire assembly in a different orientation.

It is believed that the drive systems for currently available balancers could be improved to aid in weight placement. For example, prior art balancers typically require the operator to manually rotate the wheel/tire assembly to the desired position for weight placement. These balancers then use a manual brake or the motor itself to temporarily hold the shaft in the desired position. However, such a system could be improved. Manual rotation to the desired position is less than satisfactory since it requires the operator to interpret the balancer display correctly. Moreover, manual rotation itself is not desirable, since it ties up the operator's time and attention. In conventional systems, however, the balancer motor cannot be used to rotate the wheel/tire assembly to the correct position since available motor controllers used in balancers are incapable of performing this function.

Using the motor itself to provide a braking action is not completely satisfactory either. Such braking is normally accomplished by applying rectified alternating current to an AC motor. This method is inherently subject to error. The actual stopping position may be incorrect if the tire is larger than average or turning too fast for the "brake" to respond. Moreover, although currently available motor braking systems stop the wheel in approximately the correct position, they do not actual hold the tire in position since the motor would heat up if the "brake" was left on. With conventional equipment, a wheel/tire assembly with sufficient static imbalance to overcome its own inertia, therefore, can roll away from the braked dynamic weight position as soon as the braking energy is released.

Similarly, currently available balancers require that the wheel/tire assembly be manually rotated in practically all circumstances since those balancers have no capability for applying anything other than full power to the balancer motor. That is, the motor in conventional balancers is useful for rotating the wheel/tire assembly at full speed for determining wheel imbalance, but not for accurately positioning the wheel/tire assembly subsequently for correction of that imbalance or for rotating the assembly at a slow speed for any reason. For example, currently available balancers have measuring devices for measuring rim runout. To operate these measuring devices, the operator must manually rotate the wheel/tire assembly while measuring the rim runout on first one side of assembly and then on the other. If it were not necessary to manually rotate the assembly, the rim runout of both sides could be measured by the operator simultaneously.

Currently available balancers could also be improved in another way. Presently, the wheel/tire assembly is held in place on the shaft by a wing nut. That wing nut must be manually threaded onto the threaded shaft of the balancer until it is sufficiently "tight." This procedure takes operator time and attention and is not always particularly accurate since the operator often cannot accurately judge how tight the wing nut is or how tight it should be. Mounting of the wheel/tire assembly on the balancer is also subject to additional sources of error. Tire assemblies typically center via a tapered cone mounted on the balancer shaft. If the assembly is not rotated as the wing nut is tightened, the assembly may shove the cone along the mounting shaft rather than slide up the cone, causing miscentering. If the wheel/tire assembly is left in this position, the resulting imbalance measurements will be meaningless. A balancer which eliminates this potential source of error would be desirable.

Prior art motor driven balancer motors are desired to operate at a single speed. This speed is usually approximately the synchronous speed of an ac motor. For big tires, this can be a problem. Since ac motor torque drops dramatically near synchronous speed, it takes many seconds for prior art balancers to bring large tires to the (single) measuring speed. This wasted time is, of course, undesirable. Moreover, at the preset single measuring speed of prior art balancers, the imbalance signals may be out of range when a wheel with a large imbalance is being tested. This "out of range" condition could be eliminated by rotating the wheel at a lower speed, but presently available balancers are incapable of such operation. In addition, some balancers simply ignore the fact that the imbalance signals are out of range, resulting in an imbalance "correction" which is incorrect. It has also been discovered that vibration resonances in the balancer itself may, on occasion, cause erroneous readings. Currently available balancers have no way to compensate for such resonances, since they are capable of operation only at one speed. If that speed happens to correspond to a balancer resonance, then the results from that balancer will be faulty. At least one available balancer does examine the measured results, to see if they "make sense." But that balancer simply rejects out of range data and takes new measurements at the same speed. Of course, if the reason for the inconsistent data is a machine resonance, the new measurements at the same speed suffer from the same deficiencies as the old with the prior art balancer.

Some balancers spin the wheel/tire assembly up to a maximum speed, and then take imbalance measurements while the wheel/tire assembly is coasting (i.e., no torque is applied to the assembly during imbalance measuring). This reduces apparent imbalance variations due to the motor, but it has the disadvantage that the actual speed during the measuring process varies due to slight deceleration, which can skew the results.

Balancers which operate at a single speed could also be improved for different reasons. Some operators prefer to measure wheel/tire imbalance at a rotational speed which corresponds to highway speeds. However, a balancer shaft rotational speed which corresponds to highway speeds for large tires may correspond to a much lower rotational speed for smaller tires. Single speed balancers are incapable of taking tire diameter into account. Moreover, there are angular momentum safety limits which can be exceeded by a single speed balancer for large/heavy tires. Such balancers have no way to reduce the measuring speed to remain within safety limits.

The torque characteristics of prior art balancers could also be improved. For example, these balancers basically have a single motor torque response which is applied to the wheel/tire assembly during spin up, resulting in jerking the wheel at the start of the spin (such as connecting the AC line to an AC motor via a relay). Such balancers often require means for detecting whether the wheel has come loose as a result of the jerking action. On the other hand, a relatively low torque balancer does not jerk the wheel upon starting, but suffers from undesirably long spin up times, especially with big wheels.

Presently available balancers also suffer from another disadvantage. It would be desirable to stop the balancer motor upon loss of power to the balancer. AC motors, however, are incapable of performing this function. Accordingly, a separate mechanical brake and solenoid are now required to stop the balancer during power outages, if this feature is desired. These extra parts add undesirable cost and complexity to the design.

Even when a wheel/tire assembly is balanced, non-uniformity in the construction of the tire as well as runout in the rim can cause significant vibration forces as the wheel rolls under vehicle load. Most tire manufacturers inspect their tires on tire uniformity machines and grind rubber off the tires as required to improve rolling characteristics of the tires. Even after this procedure, tires will often produce vibration forces (not related to imbalance) of 9.09 kg (20 pounds) as they roll on a smooth road. To put this in perspective of balancing, a 29.7 g (0.8 ounce) balance weight is required to produce a 90.9 kg (20 pound) vibration force on a typical wheel traveling at 31,3 m/s (70 mph).

Prior art balancers are also not well equipped to take into account and correct for variations in uniformity of the wheel rim and the tire. It would be desirable, for example, to place a measured amount of imbalance in a wheel to counter tire non-uniformity forces or to detect and mark the position on a tire which should be matched to a corresponding position on the rim to reduce vibration due to non-uniformity of either or both. It would also be desirable to have a balancer which included means for indexing the wheel rim with respect to the tire by first breaking the rim/tire bead while the rim/tire is mounted on the balancer and then indexing the rim via the motor while the tire is held stationary. To the extent that presently available balancers do measure rim and tire runout, it is believed that they could be further improved by comparing the measured rim and tire runout values with specifications.

On a front wheel drive automobile, if the effective diameters of the two front tires differ by only a small amount the vehicle will tend to steer away from a straight line. It would be desirable for a balancer to accurately measure the difference in effective diameters of tires so that this problem could be avoided.

Some tire/wheel assemblies develop forces in the lateral (or axial) direction when rolling straight ahead on a flat road. This condition will also cause a vehicle to steer away from a straight line. A balancer with the ability to measure these forces as the wheel rotates in either direction would be desirable.

US 5,103,595 discloses a wheel balancer according to the preambles of claims 1, 6 and 8. WO 88/03866 discloses a wheel balancer which also comprises a load roller for applying a radial force on the wheel/tire assembly.

## Background Art

Among the various objects and features of the present invention is a wheel balancer with improved performance.

Another object is the provision of such a wheel balancer which reduces vibrations caused by non-uniformity of a tire by leaving the appropriate imbalance in the wheel.

Still another object is the provision of such a wheel balancer which facilitates the matching of a tire and rim to reduce tire vibration.

Still another object is the provision of such a wheel balancer which conveniently measures rim and tire runout and compares those measured values with specifications.

Other objects and features will be in part apparent and in part pointed out hereinafter.

In a first aspect of the invention is provided a wheel balancer according to claim 1. In a second aspect of the invention is provided a wheel balancer according to claim 6.

## Description of the Drawings

Fig. 1 is a diagrammatic view illustrating a generic wheel balancer suitable for use with the present invention;
Fig. 2 is a simplified top plan view illustrating an example of a wheel balancer;
Fig. 3 is a block diagram illustrating electrical circuitry of the wheel balancer of Fig. 1 or Fig. 2;
Fig. 4 is a simplified schematic of the electronic control circuitry of the balancer of the present invention;
Fig. 5 is a block diagram of motor control circuitry of the balancer of the present invention;
Fig. 6 is a perspective view illustrating force components involved in balancing a wheel/tire assembly; and
Fig. 7 is a simplified block plan view illustrating the use of the balancer of the present invention with a load roller and various measuring devices.

Similar reference characters indicate similar parts throughout the several views of the drawings.

## Best Mode for Carrying Out The Invention

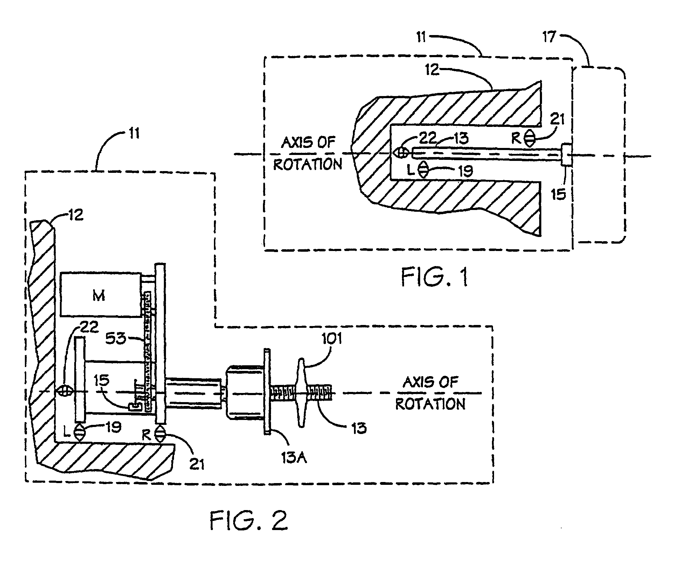

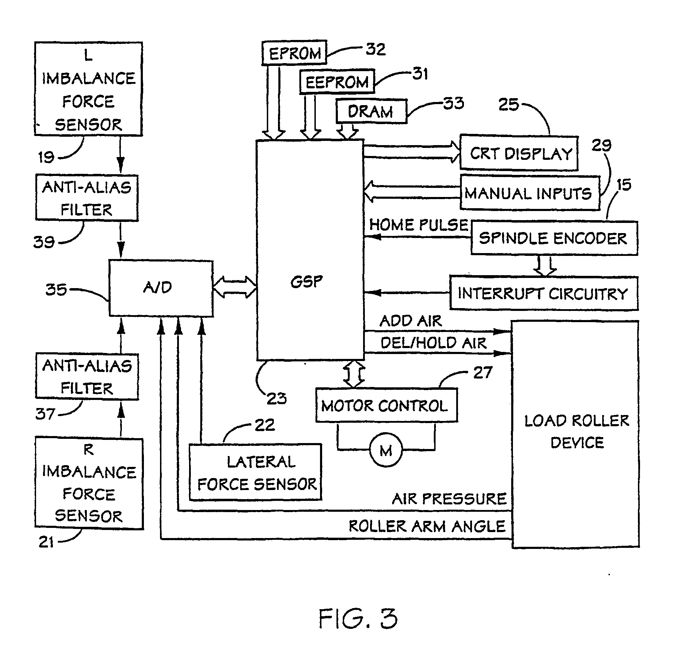

Turning to the drawings, Fig. 1 illustrates (in simplified form) the mechanical aspects of a generic wheel balancer 11 suitable for the present invention. Balancer 11 includes a rotatable shaft or spindle 13 driven by a suitable drive mechanism such as a direct current 0.37/W (0.5 horsepower) electric motor M and drive belt 53 (Fig. 2). Mounted on spindle 13 is a conventional quadrature phase optical shaft encoder 15 which provides speed and rotational position information to the circuitry of Fig. 3.

During the operation of wheel balancing, at the end of spindle 13, a wheel/tire assembly 17 under test is removably mounted for rotation with spindle hub 13A (Fig. 2). To determine wheel/tire assembly imbalance, the balancer includes at least a pair of piezoelectric type imbalance force sensors 19 and 21 (or other suitable sensors such as strain gauges) coupled to spindle 13 and mounted on the balancer base 12. For ease of reference herein, sensor 19 is referred to as the "L" (Left) sensor and sensor 21 is referred to as the "R" (Right) sensor. A third force sensor 22 is disposed adjacent shaft 13 to detect lateral force along the axis of wheel assembly rotation. The purpose of sensor 22 is described below. Sensor 22 may be, for example, a conventional strain gauge sensor (or the like).

Turning to Fig. 2, it can be seen that the actual construction of the mechanical aspects of balancer 11 can take a variety of forms. For example, spindle 13 can include a hub 13A against which wheel/tire assembly 17 abuts during the balancing procedure. Moreover, sensor "L," sensor "R," and sensor 22 need not directly abut spindle 13. For example, various arms or rods as shown in Fig. 2 can be used to mechanically couple the sensors to the spindle so that they are exposed to the vibrations and/or forces of the spindle.

When wheel/tire assembly 17 is unbalanced, it vibrates in a periodic manner as it is rotated, and these vibrations are transmitted to spindle 13. The "L" and "R" sensors are responsive to these vibrations of the spindle. Specifically, they generate a pair of analog electrical signals corresponding in phase and magnitude to the vibrations of the spindle at the particular transducer locations. These analog signals are input to the circuitry of Fig. 3, described below, which determines the required magnitudes and positions of correction weights to correct the imbalance.

Turning to Fig. 3, wheel balancer 11 includes not only the "L" and "R" sensors, and spindle encoder 15, but also a graphic signal processing (GSP) chip 23. Preferably GSP chip 23 is a Texas Instruments model TMS34010 chip. GSP chip 23 performs signal processing on the output signals from the "L" and "R" sensors to determine wheel imbalance. In addition it is connected to and controls a display 25 which provides information to the user, controls motor M through motor control circuitry 27 described in more detail below, and keeps track of the spindle position from encoder 15. More specifically, encoder 15 is a 128 count, two channel quadrature encoder which is fully decoded to 512 counts per wheel revolution by GSP chip 23. Although GSP chip 23 is preferred, it should be understood that other controller circuitry could be used as well.

Balancer 11 also includes manual inputs 29 (such as a keyboard and parameter input data dials) which are also connected to GSP chip 23. By using GSP chip 23, no additional general purpose computer or microprocessor is needed for balancer 11. Chip 23 has sufficient capacity to control via software all the operations of the balancer in addition to controlling the display. The GSP chip is connected to EEPROM memory 31, EPROM program memory 32, and dynamic RAM (DRAM) memory 33. The EEPROM memory is used to store non-volatile information, such as calibration data, while the GSP chip uses DRAM 33 (as discussed below) for storing temporary data.

GSP chip 23 is also connected to an ADC 35 which is preferably an Analog Devices AD7871 type device or any other appropriate chip. ADC 35 is a fourteen (14) bit A/D converter with an on-board voltage reference.

The signals from the "L" and "R" sensors 19 and 21 are supplied through anti-aliasing circuitry 37,39 to ADC 35. More specifically, the signals are each fed through unity gain buffers (not shown but well known in the art), to anti-aliasing filters making up part of circuitry 37, 39. Sallen/Key type low pass Butterworth filters function well for this purpose.

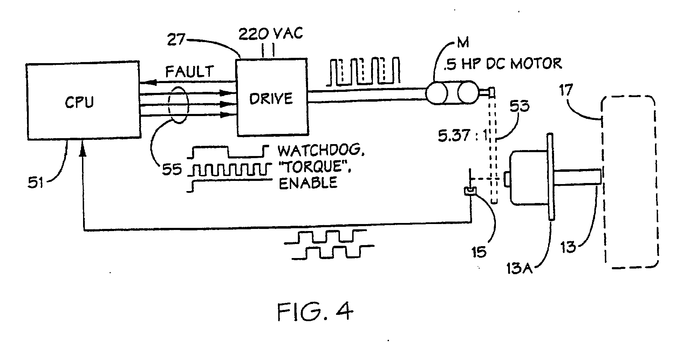

The operation of the various components described above is fully described in U.S. Patents 5,365,786 and 5,396,436, the disclosures of which are incorporated herein by reference. It should be understood that the above description is included for completeness only, and that various other circuits could be used instead. The GSP chip could be replaced by a general purpose microcontroller, for example, with no loss of efficiency in carrying out the present invention. The motor drive aspects of the present invention may be better understood by reference to the simplified diagram of Fig. 4 in which the GSP chip is replaced with a generic CPU 51 and motor M drives the wheel/tire assembly through a 5.37:1 belt drive 53. Also indicated in Fig. 4 is a 30 Hz watchdog pulse supplied on a set of control lines 55 to motor control drive 27. In addition, control line set 55 includes a digital square wave of software settable frequency which is interpreted by the motor drive as a linear function of desired "torque." In other implementations of this invention, it is also possible to achieve this function using a varying analog level, a pulse width modulated digital signal, and other such approaches, depending on the drive input requirements. The third control line to the motor drive is a drive enable line.

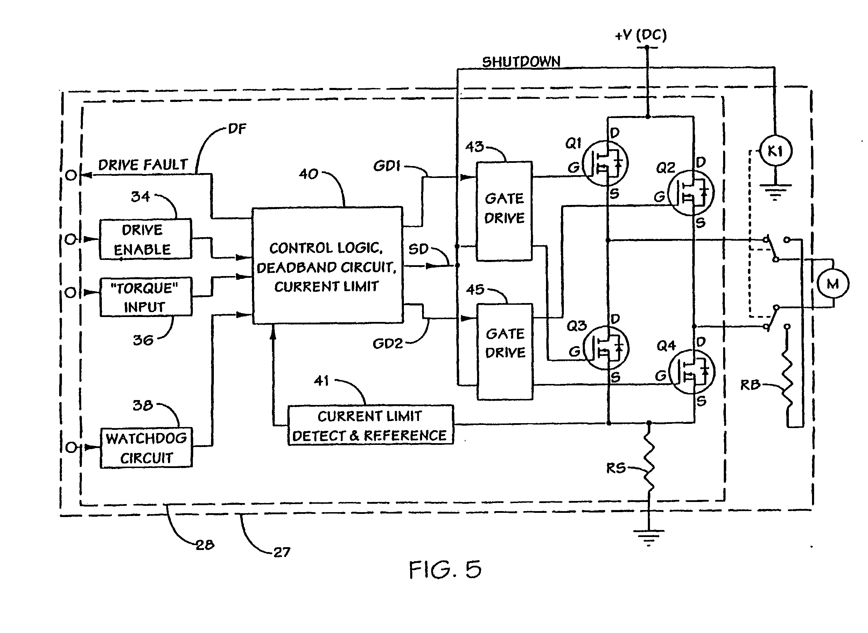

The motor control drive 27 is illustrated in Fig. 5. Drive circuit 27 has four drive transistors Q1, Q2, Q3 and Q4 connected as shown to provide direct current to the windings of direct current motor M selectively with each polarity. Specifically, transistor Q1 is connected to supply current from a dc rectified source to one side of the windings of the motor. When current is supplied through transistor Q1 to the windings, the circuit is completed through the windings and transistor Q4 (and a current sensing resistor RS) to ground. This causes the windings of motor M to be energized so as to cause rotation of the balancer shaft in a first rotational direction. Similarly, when transistors Q1 and Q4 are rendered non-conductive and transistors Q2 and Q3 conduct, the windings are energized in the opposite polarity. It is preferred that the direction of rotation of motor M be controlled by pulse width modulating (PWM) current to the transistors. A duty cycle of 50% causes the current to flow through motor M in both directions in equal amounts. By the use of a suitably high pulse rate, the motor has insufficient time to respond to the rapidly reversing currents, with the result that the motor velocity is zero. As explained below, the dc motor actively holds the shaft at its present location. This provides, in effect, a "detent" function for the drive circuit 27.

A duty cycle of less than 50%, on the other hand, causes counterclockwise rotation of the motor shaft. As the duty cycle decreases from 50%, the counterclockwise torque becomes stronger and stronger. Similarly, a duty cycle of more than 50% causes clockwise rotation of the motor shaft. As the duty cycle increases above 50%, the clockwise torque in turn becomes stronger and stronger. A 0% duty cycle results in maximum torque counterclockwise, while a 100% duty cycle results in maximum torque clockwise.

It is preferred that transistors Q1 - Q4 be insulated gate bipolar transistors (IGBTs) such as those sold be International Rectifier under the trade designation IRGPC40KD2. Other similar transistors, or transistors having similar characteristics such as MOSFETS, could also be used.

It is also preferred that the control signals and transistors Q1 - Q4 be supplied from a commercial drive system 28 such as Copely Controls model 421 DC drive, Electro-Craft model DC-45L drive, or a Minarik SCR-based model RG400UA drive. Of course, drive systems built specifically for the present system using currently available components such as those sold under the trade designation IR2112 by International Rectifier could also be used. If it is desired to use an AC motor, the drive system would preferably be some type of AC vector drive, although such drives are at present significantly more expensive.

Whatever drive system is used, it preferably has interface circuits 34, 36, and 38 for the drive enable, "torque" input, and watchdog inputs respectively from the CPU. These signals are supplied to a control logic circuit 40 which performs necessary logic functions, as well as conventional deadband, and current limit functions. In the event that a commercial drive system is not used, circuits to perform the functions of circuit 40 are well known. The current limit function of circuit 40 depends upon the current measured by current sense resistor RS, the voltage across which is detected by a current limit detection and reference circuit 41.

Circuit 40 has four outputs. The first, a drive fault line DF, is used to signal the CPU chip that a drive fault has occurred. The second and third, labeled CD1 and GD2, supply PWM control signals to the actual gate drive circuits 43 and 45, circuit 43 being connected to the gates of transistors Q1 and Q3, and circuit 45 being connected to the gates of transistors Q2 and Q4. The fourth output of circuit 40, labeled SD, allows circuit 40 to provide a shutdown signal to gate drive circuits 43 and 45. In addition, the shutdown signal is supplied to a relay K1, whose contacts are connected as shown to motor M. When the shutdown signal occurs, the relay causes the windings of motor M to be disconnected from the drive transistors Q1 - Q4 and to instead become connected across a braking resistor RB. This provides braking for the motor during a shutdown condition.

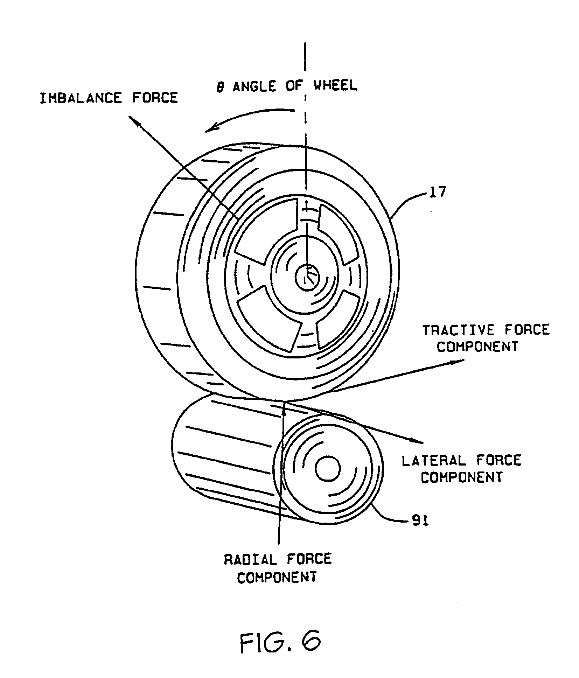

To understand the improvements of the present invention, it is helpful to examine some terms. Fig. 6 shows a tire 17 with a load roller 91 pressing against it, along with the three contact forces which are defined as radial, lateral and tractive. Tire uniformity is a term which refers to a condition in which some property of a tire is not symmetric about its rotational axis. There are many uniformity parameters which can be quantified. A few of the more useful uniformity parameters are:

Loaded radial runout - The change in position relative to the wheel in the radial direction of a non-fixed roller which contacts a wheel with a constant load as the wheel rotates about an axis.

Radial force variation - The change in force in the radial direction between a wheel and a fixed roller as the wheel rotates about a fixed axis.

Lateral force variation - The change in force in the lateral direction between a wheel and a fixed follower as the wheel rotates about a fixed axis.

Tractive force variation - The change in force in the tractive direction between a wheel and a fixed roller as the wheel rotates about a fixed axis.

The four parameters defined above can be described as a plot of the runout (or variation) versus the angle of wheel rotation θ. The following mathematical operations can be applied to the runout or variation measurements to obtain values which are useful in optimizing uniformity or in comparing to specifications.

Peak to peak of function $F_\theta$ = Max value $F_\theta$ -Min value $F_\theta$

First harmonic of $F_\theta$ = 1st Fourier coefficient of $F_\theta$

Second harmonic of $F_\theta$ = 2nd Fourier coefficient of $F_\theta$

$$\text{Root-mean-square value of } F_\theta = \sqrt{\frac{1}{i2\pi} \int_0^{i2\pi} F_\theta^2(\theta)d\theta}$$

$$\text{Arithmetic mean of force variation} = \frac{1}{i2\pi} \int_0^{i2\pi} |F_\theta|(\theta)d\theta$$

where i is the number of revolutions over which to take data.

The root-mean-square value of radial force variation is a good uniformity parameter to use, as shown in U.S. Patent 4,702,103, because it is representative of the power produced by the tire rotating on the vehicle as a result of force variations in the vertical direction.

A value for the tire stiffness is required to convert rim runout into radial force variation due to rim runout: (rim runout)(tire stiffness)=radial force variation due to rim runout. Loaded radial runout of the wheel tire assembly can also be converted to a force variation value by using the tire stiffness or it can be measured directly as will be shown later. By subtracting the rim force variation from the wheel/rim assembly force variation, the tire force variation can be obtained. By shifting the angle of the tire force variation relative to the rim force variation, the root-mean-square value of wheel/tire assembly force variation can be computed at many remount angles of tire to rim. Selecting the remount angle with the lowest wheel/tire assembly radial force variation is then possible.

The first harmonic of radial force variation is believed to be the best uniformity parameter to use to minimize wheel vibration because it also helps minimize the first harmonic tractive force variation. U.S. Patent 4,815,004 shows how tractive force variation can be determined based on wheel properties and rotational speed squared. Taking equation (17) in U.S. Patent 4;815,004 and applying it to a vehicle moving on a flat road at constant speed, one finds:

$$F_T = \frac{I\omega^2}{r} \sum_{i=1}^{\infty} iU_i \cos(i\omega t + \phi_i)$$

where $F_T$ is the tractive force on the tire, I is the polar moment of inertia of the wheel/tire assembly and vehicle hub, $\omega$ is the angular velocity of the wheel, r is the outer radius of the tire, $U_i$ is the ith Fourier coefficient of the change in effective radius per revolution of the tire, t is the elapsed time, and $\phi_i$ is the phase shift of the ith harmonic. This equation may be used to calculate the radial and tractive force variations on a wheel with typical properties as illustrated by the following example:

Wheel/tire assembly is perfectly uniform except for 0.13 mm (0.005") radial mounting offset on the vehicle hub

Wheel assembly weight = 15.9 kg (35 lb).

O.D. of wheel = 61 cm (24 inches)

Polar moment of inertia of the wheel/tire assembly and vehicle hub = 0.95 kg m$^2$ (0.7 slug ft$^2$)

Vehicle speed = 33.5 m/s (75 mph), which means the wheel rotational speed is 110 radians/second

Tire stiffness if 915 kg/cm (1200 lb/inch)

Peak to Peak Radial force variation = (0.005")(1200 lb/in)(2) = 4.45 kg (12.0 lb)

Peak to Peak Tractive force variation = ((0.7 slug ft$^2$)(110$^2$)(radian/sec)$^2$/1ft)*

(0.005/12ft)(2)=3.23 kg (7.1 lb)

Note: 90 degrees of wheel rotation occurs between peak radial and tractive forces.

The combination of radial and tractive forces, therefore, is equivalent to a force vector which rotates with the tire. It is believed that the relationship between wheel/tire assembly radial and tractive force variations caused by factors other than mounting offset used in this example is similar.

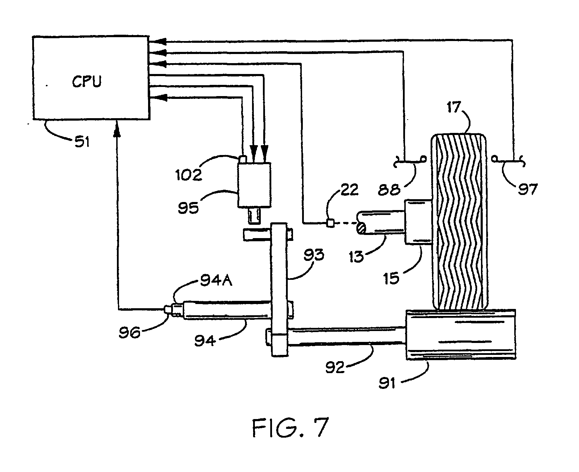

Turning to Fig. 7, there is shown a load roller 91 suitably disposed adjacent wheel/tire assembly 17 so that it may be forced into engagement with the tire so as to measure loaded runout of the assembly. More specifically, load roller 91 is carried on a shaft 92 suitably journaled on an L-shaped arm 93 (only the lower limb of which is clearly visible in Fig. 7) designed to pivot about the axis of a shaft 94. CPU 51 causes the arm to pivot to place load roller into engagement with the tire by actuating an air cylinder 95 or an air bag actuator. Air pressure to cylinder 95 can be variably adjusted by CPU control. Air pressure feedback is provided by a sensor 102 such as those sold under the trade designation MPX 5700D by Motorola Inc.. The feedback enables precise load roller forces to be generated and provides a unique safety feature in that the CPU can detect pressure problems and remove air pressure if needed. Rotation of shaft 94 (specifically rotation of a magnet 94A mounted on shaft 94) is sensed by a sensor 96 such as a Hall-effect sensor such as those sold under the trade designation 3506, 3507 or 3508 by Allegro Microsystems Inc. and the amount of rotation is signaled to the CPU.

By applying a known force to the tire with the load roller and watching the output of sensor 96, the CPU can determine the loaded runout of the wheel/tire assembly. Specifically, CPU 51 uses the output of sensor 96 to measure the runout of wheel/tire assembly 17 under the predetermined load. To determine imbalance weight amounts which are required to counteract the forces due to runout of the wheel, the CPU also needs tire stiffness information. Stiffness information can be downloaded directly from another measuring device such as a shock tester (not shown), or can be manually input using the manual input device 29, or can be recalled from a stored database. Alternatively, the CPU can determine tire stiffness directly by sequentially applying at least two different loads to load roller 91 and measuring the change in deflection. The amount of additional correction weight needed to counteract the forces due to the loaded runout is found by the following formula:

$$\text{correction mass} = \frac{\text{loaded runout first harmonic} * \text{tire stiffness} * \text{\%radial force to counteract}}{(\text{radius to place correction weight}) * (\text{rotational speed})^2}$$

With the additional mechanisms of Fig. 7, it is possible to further improve the balancing of the wheel/tire assembly. For example, by manually inputting the load range of the tire under test, the operator can cause CPU 51 to adjust the force on load roller 91 to a value which will make the loaded runout measurement most closely agree with the vibration of the wheel when it is mounted on the vehicle. Moreover, the speed at which the vibration is to be minimized may also be inputted to CPU 51 so that imbalance correction may be optimized for this parameter as well. Generally, that speed would be selected to be at or slightly above the wheel hop resonant frequency. This speed also should be close enough to the maximum operating speed to prevent excessive correction at the maximum speed. The amount of this correction also should have a maximum limit of 14.2 g (0.5 oz).

In addition, CPU 51 is preferably connected to a suitable sensor 88 (or even two sensors 88 and 97) for measuring the roundness of the rim of assembly 17 at one or both bead seats. Such sensors are often part of a wheel contact arm which defines a wheel contact point or points on the wheel. The wheel contact point is conventionally horizontally displaced from a vertical plane passing through the shaft spin axis.

Various sensors suitable for the task are known. The output of this sensor generates a rim roundness signal. The first harmonic of radial rim runout (both angle and magnitude) is determined by CPU 51 using a suitable procedure such as digital filtering or discrete Fourier transform (DFT). Preferably rim runouts on each bead seat are averaged together to yield the overall rim runout. With both tire and rim roundness measurements, CPU 51 is able to compare the measured values with stored rim and tire runout specifications. When those specifications are not met, it is a simple calculation to determine a remounted orientation of the tire on the rim which minimizes the total loaded runout. CPU 51 causes the display of such an orientation on display 25, along with the residual loaded runout which would remain after remounting. Alternatively, this information may be used to calculate the positions and amounts of required tire grinding to correct the loaded runout.

Since the present motor control circuitry is capable of rotating the balancer shaft at any speed, it may, if desired, slowly rotate the wheel/tire assembly while the various runout measurements are being taken. If desired, such measurements may be taken over two or more revolutions of the wheel/tire assembly, and the results averaged. If measurements over different revolutions differ by more than a preset amount, CPU 51 is preferably programmed to take additional measurements.

Since the angular position of the wheel/tire assembly is directly controllable with the motor control circuitry of the present invention, after the minimized loaded runout position is calculated, CPU 51 may cause the assembly to slowly rotate to that position (putting that position on the tire at a predetermined position such as twelve o'clock, for example) and then hold that position. If a tire bead breaker is integrated with the balancer, motor M can index the rim while the tire is held stationary by the bead breaker, eliminating many steps of current matching procedures involving a separate tire changer.

Note that the control circuit can also use knowledge of the location of the wheel contact point and the sensed imbalance of the vehicle wheel to determine at least one correction weight placement position to correct the imbalance. Since the control circuit can determine the diameter of the vehicle wheel at the wheel contact point, it also determines a diameter dependent weight contact angle corresponding to the required wheel rotational position which would cause at least one required correction weight position on the wheel to coincide with the wheel contact point. The control circuit senses the rotational position of the vehicle wheel and automatically indexes the vehicle wheel so that the correction weight placement position corresponds to the diameter dependent weight contact angle for application of the correction weight.

This same method can, of course, be used in the case where at least two correction weight placement positions are determined. In that case the control circuit also automatically indexes the vehicle wheel for application of a second correction weight at a second diameter dependent wheel contact angle once the wheel contact arm reaches a predetermined position. Alternatively, the indexing to the second contact angle can await the receipt of a manual input, which may be either a manually initiated electronic signal or a manually initiated rotational force applied to the vehicle wheel.

It should be understood that there is always some gap between the rim center-hole and the hub pilot diameter of the vehicle when the wheel/tire assembly is finally mounted on the vehicle. To compensate for this it is desirable to mark the high loaded runout position of the wheel/tire assembly and put this mark at the twelve o'clock position when mounting the assembly on the vehicle. (Alternatively, the low runout position may be marked and that mark mounted at the six o'clock position.)

In addition, instead of measuring deflection of the load roller 91 as described above, alternatively CPU 51 can use the balancer force transducers 19 and 21 to measure the load applied by a rigidly mounted roller. Roller 91 can be rigidly mounted, for example, by loading it with a desired force from an air cylinder and then locking it into place with a pawl or using an electric motor with lead screw and nut. This measurement (known as radial force variation) can be used to determine what correction weights are needed to cancel out the vibrations due to this wheel assembly non-uniformity. Note that tire stiffness is not required to find the correction weights needed to counteract the wheel's radial force variation. Using this system, the

$$\text{correction mass} = \frac{\text{first harmonic of radial force variation}}{(\text{radius to place correction weight}) * (\text{rotational speed})^2}$$

If there is a difference in effective diameters in two wheels mounted on the front of a front wheel drive vehicle, there will be a tendency for the vehicle to steer away from a straight line when driven on a flat road. The effective diameter of a wheel/tire assembly is the distance a vehicle will advance in a straight line on a flat road when the wheel/tire assembly rotates exactly one revolution, divided by the value of $\pi$. Differences in effective diameter as small as 0.33 mm (0.013 inches) have caused noticeable steering problems. The output of sensor 96 shown in Fig. 7, which measures the rotational position of the load roller arm, can be used to determine a value related to the effective diameter of the wheel/tire assembly. An alternate method to determine the effective diameter is by measuring the ratio of the angular rotation of the load roller and the angular rotation of the wheel/tire assembly and then multiplying this ratio times the diameter of the load roller. Displaying a message to the operator pertaining to effective diameters (or differences in diameters) of the wheel/tire assemblies and to stored specifications is useful.

Due to non-uniform construction, a tire can have a non-zero lateral force component (see Fig. 6 for an illustration). When wheel/tire assemblies with this condition are mounted on the front of a vehicle, there is a tendency for the vehicle to steer away from a straight line while driven on a flat road. By including an additional force sensor 22 (Fig. 1), which is responsive to lateral forces between the load roller and the wheel/tire assembly, these lateral forces can be measured and compared to stored specifications and displayed to the operator when a steering problem is likely to occur. If the axis of the load roller and the axis of the mounted wheel/tire assembly vary from parallel by even a small amount, a perfectly uniform wheel/tire assembly may falsely have a large average lateral force measurement. By measuring changes in lateral force between different wheel/tire assemblies, meaningful information can still be obtained and displayed even if the roller and wheel mounting spindles are not parallel. The ability to rotate the wheel/tire assembly in both directions is also useful in measuring the lateral forces on a wheel/tire assembly. The direction of lateral force on some wheel/tire assemblies remains nearly constant and in the same direction as the assembly is rotated both clockwise and counterclockwise. Wheel/tire assemblies with different construction defects may have the lateral force reverse direction when the rotational direction is reversed.

Different vehicles are sensitive to non-uniformity in wheel/tire assemblies at different levels. For example, a medium duty truck with a first harmonic radial force variation of 22.7 kg (50 lb). will not be likely to receive ride quality complaints while the same value of first harmonic radial force variation on a small automobile is very likely to produce an objectionable ride. By providing means for the operator to input the vehicle model or the class of vehicle on which the wheel/tire assembly is to be mounted, and by having stored uniformity specifications contained in the balancer's control circuit, it is possible for the balancer to compare the measured wheel/tire assembly's uniformity parameters to the specifications and send a message to the operator when the wheel/tire assembly is outside of specification. A very complete listing of hundreds of vehicle models and optional equipment packages could be used, or a very simple class system with as few as two classes (such as car vs. truck) could be used to apply stored specifications. The use of these specifications can help the operator spend time where it is useful and avoid wasting time and effort when the specifications show that a large value of a uniformity parameter is acceptable.

After measurements and computations have been made to determine the values of various uniformity parameters, this information can be displayed to the operator.

Immediately after a tire is mounted to a rim, the tire bead is not always firmly located against the rim bead seat. This can result in errors in imbalance measurements. An important benefit of the load roller is that it strains the tire and causes the tire bead to seat firmly before balancing. Additionally, the load roller provides a break-in of the tire carcass (reducing or eliminating nonuniformities due to initial construction of the tire or from the tire being deformed during shipping and storage).

Although automatic movement to a calculated rotational position is described above in connection with loaded runout, it should be understood that the present balancer is capable of such automatic movement to any calculated position, such as correction weight application points other than the standard 12:00 o'clock position. For example, to mount an adhesive backed weight, the CPU causes the motor to rotate the wheel/tire assembly so that the correction weight position matches the 6:00 position so that the operator can more easily apply the weight. The particular type of weight(s) being used are manually input using device 29 so that the CPU can perform the proper calculation of correction weight position. In addition, a desired wheel/tire assembly rotational position may be manually requested by manual input device 29. Alternatively, an operator may manually move the wheel/tire assembly from one position at which the motor is holding the assembly to another. CPU 51 is programmed to cease holding at any given position once an angular force greater than a predetermined threshold force is applied to the assembly, such as by the operator pushing the tire. The magnitude of such a force is sensed indirectly by the CPU by examining the amount of current required to overcome the applied force and hold the wheel/tire assembly in place. Once the manual movement of the assembly stops, CPU 51 controls motor M to rotate the wheel to the other balance plane weight location and hold the assembly in the new position.

CPU 51 also controls the torque applied by the motor indirectly. The EEPROM has stored the current vs. torque characteristics of the motor M and uses those characteristics to determine the actual torque applied. This actual torque is compared to the desired torque for any particular application, several of which are described below. A simple example is the application of relatively low torque at the start of the spin, which prevents jerking of the wheel by the balancer, followed by relatively higher torque to accelerate the tire to measurement speed as quickly as possible.

Slow rotation of the wheel/tire assembly is useful in several situations. For example, in measuring rim runout (whether loaded or unloaded) CPU 51 can rotate the assembly 17 at a controlled slow speed (60 rpm (1 Hz) or so). This frees both of the operator's hands so that left and right rim runout may be measured simultaneously. Slow rotation is also useful in tightening wing nut 101 (Fig. 2) onto shaft 13. In this mode of operation CPU 51 causes the shaft to rotate at about 120 rpm (2Hz) while the operator holds wing nut 101 in place. This provides a quick spin-on of the wing nut. Rotation continues until the current draw indicates resistance against further movement. Alternatively, the CPU may examine the current vs. torque characteristics of the motor to allow the operator to continue tightening the wing nut until a desired preset torque is reached. In yet another mode, the shaft rotates at an even slower speed (30 rpm (1/2 Hz) or so) while the operator tightens the wing nut. This allows the wheel to "roll" up the cone taper, instead of being shoved sideways up the taper, resulting in better wheel centering on the cone.

Although the present motor control is capable of very slow rotation and fast rotation for measurement, intermediate speeds for imbalance measurement are also achievable and useful. For example, a large tire (as measured by sensor 96 or as indicated by a manual input from device 29) may be rotated at a speed which is somewhat slower than that used for smaller tires. This shortens total cycle time and also allows the rotary inertia of big tires to be kept below predefined safety limits (which feature is especially useful with low speed balancing with no wheel cover). Similarly, a tire with a large imbalance may be tested at a slower speed than usual to keep the outputs of sensors 19 and 21 within measurable range. This prevents analog clipping of the sensor signals and permits accurate imbalance measurements to be taken under extreme imbalance conditions. In addition, large tires may be rotated at a slower rotary speed than smaller tires to achieve the same linear speed (km/h (MPH)) for those operators who desire to test wheel imbalance at speeds corresponding as much as possible to highway speeds or a "problem" speed.

Since the speed of rotation can be accurately controlled with the present invention, it is desirable to perform a calibration run on the balancer in which the balancer is automatically sequenced through a multitude of speeds. If balancer resonant vibrations are detected by CPU 51 at any of those speeds, CPU 51 stores those resonant speeds in memory and avoids those resonant speeds in subsequent measurement operations on a wheel/tire assembly. The magnitude of signal from an imbalance force sensor normally increases nearly proportionally to the square of the rotational speed. The angular relationship of the signal to the balancer spindle normally does not change significantly with rotational speed. Any deviation from this signal/frequency relationship can be detected as a resonance.

In a similar manner, the balancer can detect that an imbalance measurement of a wheel is invalid by comparing each revolution's sensor reading and if the magnitude or angle changes beyond preset limits then the measurement is considered "bad" and the CPU changes the speed of rotation until a good reading can be obtained.

Inasmuch as the present invention permits the wheel/tire assembly to be rotated in either direction, the present balancer may be used to rotate in either direction, as selected by the operator. In addition, if desired, the assembly may be rotated in a first direction for measurement of imbalance and in the opposite direction during the check spin after correction weight(s) are applied.

In view of the above, it will be seen that all the objects and features of the present invention are achieved, and other advantageous results obtained. The description of the invention contained herein is illustrative only, and is not intended in a limiting sense.

## Claims

1. A wheel balancer comprising
   a shaft (13) adapted for receiving a wheel/tire assembly (17), said shaft (13) having a longitudinal axis and being rotatable about said axis so as to rotate the wheel/tire assembly (17) removably mounted thereon;
   a rotation sensor assembly (15) for measuring rotation of the shaft (13) about its longitudinal axis;
   a vibration sensor assembly (19; 21) for measuring vibration of the wheel/tire assembly (17) as the wheel/tire assembly is rotated;
   a motor (M) operatively connected to the shaft (13) for rotating said shaft about its longitudinal axis, thereby to rotate the wheel/tire assembly (17);
   a load roller (91) for applying a generally radial force to the wheel/tire assembly (17) during rotation of said wheel/tire assembly in order to determine a loaded wheel/tire assembly measurement;
   means (94A; 96) for measuring movement of said roller (91) to determine the loaded wheel/tire assembly measurement while the predetermined force is applied thereto;
   a control circuit (51) responsive to the measured vibration of the wheel/tire assembly (17) to determine wheel imbalance, and responsive to the loaded wheel/tire assembly measurement to determine some predetermined uniformity parameter of the wheel/tire assembly;
   and **characterized in that** it further comprises
   input means for providing information identifying the vehicle or the class of vehicle on which the wheel/tire assembly is to be mounted, said control circuit having stored therein tire or wheel/tire assembly uniformity specifications for a plurality of vehicles or vehicle classes, said control circuit comparing said specifications for a selected vehicle or vehicle class and the measured wheel/tire assembly uniformity values to determine whether the wheel/tire assembly meets said uniformity specifications.

2. The wheel balancer as set forth in claim 1, wherein said control circuit includes means for controlling the speed of rotation of the wheel/tire assembly, said control circuit being responsive to the taking of roundness measurements to cause the wheel/tire assembly to rotate at a speed less than the speed at which imbalance is determined.

3. The wheel balancer as set forth in claim 1 wherein the control circuit is further responsive to determine and display the uniformity parameter value which would result were the tire to be remounted in an angular remounted position.

4. The wheel balancer as set forth in claims 1, 6 or 8 wherein the control circuit controls rotation of the wheel/tire assembly to rotate an angular remounted position thereof to a predetermined location to facilitate its identification.

5. The wheel balancer as set forth in claim 1 wherein the roundness measurements from successive revolutions of the wheel/tire assembly are compared to determine whether said measurements fall within a predetermined threshold of each other.

6. A wheel balancer comprising
   a shaft (13) adapted for receiving a wheel/tire assembly (17), said shaft (13) having a longitudinal axis and being rotatable about said axis so as to rotate the wheel/tire assembly (17) removably mounted thereon;
   a sensor assembly (15) for measuring rotation of the shaft (13) about its longitudinal axis;
   a motor (M) operatively connected to the shaft (13) for rotating said shaft about its longitudinal axis, thereby to rotate the wheel/tire assembly (17);
   a sensor assembly (19; 21; 22) for measuring force variations on the shaft (13) as the wheel/tire assembly (17) is rotated;
   a load roller (91) for applying a generally radial force to the wheel/tire assembly 817) during rotation of said wheel/tire assembly;
   means (88; 97) for measuring the bead seat runout of the wheel rim of the wheel/tire assembly; **characterized in that** it further comprises
   means to hold the roller (91) rigidly fixed in position while the wheel/tire assembly (17) is rotated;
   a control circuit (51) responsive to the force variation measuring sensor assembly (19; 21; 22) to measure radial force variation of the wheel/tire assembly (17), and responsive to the measurements of wheel rim runout to determine an angular remount position of the tire on the rim to minimize some predetermined uniformity parameter of the wheel/tire assembly;
   means to indicate to the user the angular remount position of the tire with respect to the rim;
   and input means for providing information identifying the vehicle or that class of vehicle on which the wheel/tire assembly is to be mounted, said control circuit having stored therein tire and wheel/tire assembly uniformity specifications for a plurality of vehicles or vehicle classes, said control circuit comparing the specifications for a selected vehicle or vehicle class and the measured tire and wheel/tire assembly uniformity values and to determine whether the wheel/tire assembly meets said uniformity specifications.

7. The wheel balancer as set forth in claim 6 wherein the control circuit is responsive to the measured vibration of the wheel/tire assembly (17) to determine wheel imbalance and Is responsive to the determined imbalance and the measured radial force variation of the wheel/tire assembly, to determine the locations and magnitudes of correction weights to add to the wheel/tire assembly (17) to reduce the vibration of the wheel/tire assembly when mounted on a vehicle travelling at a predetermined speed.

**Patentansprüche**

1. Radauswuchtmaschine, umfassend:

   eine Welle (13), die eingerichtet ist, um eine Rad/Reifen-Anordnung (17) aufzunehmen, wobei die Welle (13) eine Längsachse aufweist und um die Achse drehbar ist, um die darauf lösbar montierte Rad/Reifen-Anordnung (17) zu drehen;
   eine Drehsensoranordnung (15) zum Messen der Drehung der Welle (13) um deren Längsachse;
   eine Vibrationssensoranordnung (19; 21) zum Messen der Vibration der Rad/Reifen-Anordnung (17) während die Rad/Reifen-Anordnung gedreht wird;
   einen Motor (M), der mit der Welle (13) funktionsfähig verbunden ist, um die Welle um ihre Längsachse zu drehen, wodurch die Rad/Reifen-Anordnung (17) gedreht wird;
   eine Tragrolle (91) zum Anlegen einer im Allgemeinen radialen Kraft auf die Rad/Reifen-Anordnung (17) während der Drehung der Rad/Reifen-Anordnung, um eine Messung der geladenen Rad/Reifen-Anordnung zu bestimmen;
   Mittel (94A; 96) zum Messen der Bewegung der Rolle (91), um die Messung der geladenen Rad/Reifen-Anordnung zu bestimmen, während die vorab definierte Kraft auf diese angelegt wird;

einen Regelkreis (51), der auf die gemessene Vibration der Rad/Reifen-Anordnung (17) reaktionsfähig ist, um eine Radunwucht zu bestimmen, und auf die Messung der geladenen Rad/Reifen-Anordnung reaktionsfähig ist, um einige vorab definierte Gleichförmigkeitsparameter der Rad/lteifen-Anordnung zu bestimmen; und **dadurch gekennzeichnet, dass** sie ferner umfasst:

Eingabemittel zum Bereitstellen von Informationen, die das Fahrzeug oder die Fahrzeugklasse zu identifizieren, an dem bzw. der die Rad/Reifen-Anordnung zu montieren ist, wobei im Regelkreis Gleichförmigkeitsspezifikationen zu Reifen oder Rad/Reifen-Anordnung für eine Mehrzahl von Fahrzeugen oder Fahrzeugklassen gespeichert sind, wobei der Regelkreis die Spezifikationen für ein ausgewähltes Fahrzeug oder eine ausgewählte Fahrzeugklasse und die gemessenen Gleichförmigkeitswerte der Rad/Reifen-Anordnung vergleicht, um zu bestimmen, ob die Rad/Reifen-Anordnung den Gleichförmigkeitsspezifikationen entspricht.

2. Radauswuchtmaschine nach Anspruch 1, wobei der Regelkreis Mittel zum Kontrollieren der Drehgeschwindigkeit der Rad/Reifen-Anordnung umfasst, wobei der Regelkreis auf die Durchführung von Rundheitsmessungen reaktionsfähig ist, um zu bewirken, dass sich die Rad/Reifen-Anordnung in einer Geschwindigkeit dreht, die unter der Geschwindigkeit, in der die Unwucht bestimmt wird, liegt.

3. Radauswuchtmaschine nach Anspruch 1, wobei der Regelkreis ferner reaktionsfähig ist, um den Gleichförmigkeitspammeterwert zu bestimmen und anzuzeigen, der angibt, wo der Reifen in einer Neumontage-Winkelposition neu zu montieren ist.

4. Radauswuchtmaschine nach Anspruch 1, 6 oder 8, wobei der Regelkreis eine Drehung der Rad/Reifen-Anordnung kontrolliert, um eine Neumontage-Winkelposition davon an eine vorab definierte Stelle zu drehen, um deren Identifizierung zu erleichtern.

5. Radauswuchtmaschine nach Anspruch 1, wobei die Rundheitsmessungen aus aufeinander folgenden Umdrehungen der Rad/Reifen-Anordnung verglichen werden, um zu bestimmen, ob die Messungen in einen jeweils vorab definierten Schwellenwert fallen.

6. Radauswuehtmaschine, umfassend
   eine Welle (13), die eingerichtet ist, um eine Rad/Reifen-Anordnung (17) aufzunehmen, wobei die Welle (13) eine Längsachse aufweist und um die Achse drehbar ist, um die darauf lösbar montierte Rad/Reifen-Anordnung (17) zu drehen;
   eine Sensoranordnung (15) zum Messen der Drehung der Welle (13) um deren Längsachse;
   einen Motor (M), der mit der Welle (13) funktionsfähig verbunden ist, um die Welle um ihre Längsachse zu drehen, wodurch die Rad/Reifen-Anordnung (17) gedreht wird;
   eine Sensoranordnung (19; 21; 22) zum Messen von Kraftschwankungen an der Welle (13) während die Rad/Reifen-Anordnung (17) gedreht wird;
   eine Tragrolle (91) zum Anlegen einer im Allgemeinen radialen Kraft auf die Rad/Reifen-Anordnung (17) während der Drehung der Rad/Reifen-Anordnung;
   Mittel (88; 97) zum Messen der Felgenschulteromundheit der Felge der Rad/Reifen-Anordnung; **dadurch gekennzeichnet, dass** sie ferner umfasst:

   Mittel zum Halten der Rolle (91) in einer starr fixierten Position, während die Rad/Reifen-Anordnung (17) gedreht wird;
   einen Regelkreis (51), der auf die Kraftschwankungsmesssensoranordnung (19; 21; 22) reaktionsfähig ist, um radiale Kraftschwankung der Rad/Reifen-Anordnung (17) zu messen, und auf die Messungen der Felgenschulterunrundheit reaktionsfähig ist, um eine Neumontage-Winkelposition des Reifens an der Felge zu bestimmen, um einige vorab definierte Gleichförmigkeitsparameter der Rad/Reifen-Anordnung zu minimieren;
   Mittel zum Anzeigen der Neumontage-Winkelposition des Reifens in Bezug auf die Felge für den Benutzer;
   und Eingabemittel zum Bereitstellen von Informationen, die das Fahrzeug oder die Fahrzeugklasse zu identifizieren, an dem bzw. der die Rad/Reifen-Anordnung zu montieren ist, wobei im Regelkreis Gleichförmigkeitsspezifikationen zu Reifen oder Rad/Reifen-Anordnung für eine Mehrzahl von Fahrzeugen oder Fahrzeugklassen gespeichert sind, wobei der Regelkreis die Spezifikationen für ein ausgewähltes Fahrzeug oder eine ausgewählte Fahrzeugklasse und die gemessenen Gleichförmigkeitswelte der Rad/Reifen-Anordnung vergleicht, um zu bestimmen, ob die Rad/Reifen-Anordnung den Gleichförmigkeitsspezifikationen entspricht.

7. Radauswuchtmaschine nach Anspruch 6, wobei der Regelkreis auf die gemessene Vibration der Rad/Reifen-Anordnung (17) reaktionsfähig ist, um die Radunwucht zu bestimmen, und auf die bestimme Unwucht und die gemessene radiale Kraftschwankung der Rad/Reifen-Anordnung reaktionsfähig ist, um die Stellen und Größenordnungen von Korrekturgewichten zu bestimmen, die der Rad/Reifen-Anordnung (17) hinzuzufügen sind, um die Vibration der Rad/Reifen-Anordnung, die an einem Fahrzeug montiert ist, das sich in einer vorab definierten Geschwindigkeit bewegt, zu verringern.

**Revendications**

1. Equilibreuse de roues comprenant :

   un arbre (13) conçu pour recevoir un ensemble roue/pneu (17), ledit arbre (13) ayant un axe longitudinal et étant capable de tourner autour dudit axe de manière à faire tourner l'ensemble roue/pneu (17) monté de manière amovible sur celui-ci ;
   un ensemble formant capteur de rotation (15) pour mesurer la rotation de l'arbre (13) autour de son axe longitudinal ;
   un ensemble de capteurs de vibration (19; 21) pour mesurer la vibration de l'ensemble roue/pneu (17) alors que l'ensemble roue/pneu tourne ;
   un moteur (M) relié de manière fonctionnelle à l'arbre (13) pour faire tourner ledit arbre autour de son axe longitudinal, pour faire tourner, de ce fait, l'ensemble roue/pneu (17) ;
   un cylindre de charge (91) pour appliquer une force généralement radiale à l'ensemble roue/pneu (17) pendant la rotation dudit ensemble roue/pneu afin de déterminer une mesure d'ensemble roue/pneu en charge ;
   des moyens (94A; 96) pour mesurer le mouvement dudit cylindre (91) pour déterminer la mesure d'ensemble roue/pneu en charge tandis que la force prédéterminée est appliquée à celui-ci ;
   un circuit de commande (51) sensible à la vibration mesurée de l'ensemble roue/pneu (17) pour déterminer un déséquilibre de roue, et sensible à la mesure de l'ensemble roue/pneu en charge pour déterminer un certain paramètre d'uniformité prédéterminé de l'ensemble roue/pneu ;
   et **caractérisée en ce qu'**elle comprend en outre :

   des moyens d'entrée pour fournir des informations identifiant le véhicule ou la catégorie de véhicule sur lequel l'ensemble roue/pneu doit être monté, des spécifications d'uniformité de pneu ou d'ensemble roue/pneu pour une pluralité de véhicules ou de catégories de véhicules étant mémorisées dans ledit circuit de commande, ledit circuit de commande comparant lesdites spécifications pour un véhicule ou une catégorie de véhicule sélectionné et les valeurs d'uniformité d'ensemble roue/pneu mesurées pour déterminer si l'ensemble roue/pneu satisfait auxdites spécifications d'uniformité.

2. Equilibreuse de roues selon la revendication 1, dans laquelle ledit circuit de commande comprend des moyens pour commander la vitesse de rotation de l'ensemble roue/pneu, ledit circuit de commande étant sensible à la prise de mesures de rotondité pour amener l'ensemble roue/pneu à tourner à une vitesse inférieure à la vitesse à laquelle un déséquilibre est déterminé.

3. Equilibreuse de roues selon la revendication 1, dans laquelle le circuit de commande est en outre chargé de déterminer et d'afficher la valeur de paramètre d'uniformité qui résulterait si le pneu devait être remonté dans une position de remontage angulaire.

4. Equilibreuse de roues selon la revendication 1, 6 ou 8, dans laquelle le circuit de commande commande la rotation de l'ensemble roue/pneu pour faire tourner une position de remontage angulaire de celui-ci à un emplacement prédéterminé pour faciliter son identification.

5. Equilibreuse de roues selon la revendication 1, dans laquelle les mesures de rotondité des rotations successives de l'ensemble roue/pneu sont comparées pour déterminer si lesdites mesures tombent dans les limites d'un seuil prédéterminé les unes des autres.

6. Equilibreuse de roues comprenant :

   un arbre (13) conçu pour recevoir un ensemble roue/pneu (17), ledit arbre (13) ayant un axe longitudinal et étant capable de tourner autour dudit axe de manière à faire tourner l'ensemble roue/pneu (17) monté de manière amovible sur celui-ci ;
un ensemble formant capteur (15) pour mesurer la rotation de l'arbre (13) autour de son axe longitudinal ;
un moteur (M) relié de manière fonctionnelle à l'arbre (13) pour faire tourner ledit arbre autour de son axe longitudinal, pour faire tourner, de ce fait, l'ensemble roue/pneu (17) ;
un ensemble de capteurs (19 ; 21 ; 22) pour mesurer les variations de force sur l'arbre (13) alors que l'ensemble roue/pneu (17) tourne ;
un cylindre de charge (91) pour appliquer une force généralement radiale à l'ensemble roue/pneu (17) pendant la rotation dudit ensemble roue/pneu ;
des moyens (88 ; 97) pour mesurer la déformation de portée de talon de la jante de roue de l'ensemble roue/pneu ; **caractérisée en ce qu'**elle comprend en outre :

des moyens pour maintenir le cylindre (91) fixé rigidement en position tandis que l'ensemble roue/pneu (17) tourne ;
un circuit de commande (51) sensible à l'ensemble de capteurs de mesure de variation de force (19 ; 21 ; 22) pour mesurer la variation de force radiale de l'ensemble roue/pneu (17), et sensible aux mesures de déformation de jante de roue pour déterminer une position de remontage angulaire du pneu sur la jante afin de réduire à un minimum un certain paramètre d'uniformité prédéterminé de l'ensemble roue/pneu ;
des moyens pour indiquer à l'utilisateur la position de remontage angulaire du pneu par rapport à la jante ; et des moyens d'entrée pour fournir des informations identifiant le véhicule ou la catégorie de véhicule sur lequel l'ensemble roue/pneu doit être monté, des spécifications d'uniformité de pneu et d'ensemble roue/pneu pour une pluralité de véhicules ou de catégories de véhicules étant mémorisées dans ledit circuit de commande, ledit circuit de commande comparant les spécifications pour un véhicule ou une catégorie de véhicule sélectionné et les valeurs d'uniformité de pneu et d'ensemble roue/pneu mesurées pour déterminer si l'ensemble roue/pneu satisfait auxdites spécifications d'uniformité.

7. Equilibreuse de roues selon la revendication 6, dans laquelle le circuit de commande est sensible à la vibration mesurée de l'ensemble roue/pneu (17) pour déterminer un déséquilibre de roue et est sensible au déséquilibre déterminé et à la variation de force radiale mesurée de l'ensemble roue/pneu, pour déterminer les emplacements et les amplitudes des poids de correction à ajouter à l'ensemble roue/pneu (17) pour réduire la vibration de l'ensemble roue/pneu lorsqu'il est monté sur un véhicule se déplaçant à une vitesse prédéterminée.

FIG. 1

FIG. 2

FIG. 3

FIG. 4

FIG. 5

EP 1 731 891 B1

θ ANGLE OF WHEEL

IMBALANCE FORCE

17

TRACTIVE FORCE
COMPONENT

LATERAL FORCE
COMPONENT

91

RADIAL FORCE
COMPONENT

FIG. 6

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5103595 A
- WO 8803866 A
- US 5365786 A
- US 5396436 A
- US 4702103 A
- US 4815004 A